# EUROPÄISCHE PATENTANMELDUNG

(11) **EP 0 704 477 A1**
(43) Veröffentlichungstag der Anmeldung: **03.04.1996**
(21) Anmeldenummer: 95114694.3
(22) Anmeldetag: 19.09.1995
(51) Int. Cl.: C08K 5/15, B32B 27/08, C08L 53/02

(54) **Siegelfähige, peelbare Kunststoffolie mit alpha-Tocopherol stabilisiertem Styrol/Butadien-Blockcopolymerem**

(30) Priorität: 28.09.1994 DE 4434602
(71) Anmelder: BASF AKTIENGESELLSCHAFT, D-67056 Ludwigshafen (DE)
(72) Erfinder: Blumenstein, Uwe, Dr., D-55288 Schornsheim (DE); Niessner, Norbert, Dr., D-67159 Friedelsheim (DE)

(57) **Zusammenfassung**

Formmasse aus mindestens einem durch anionische Polymerisation zugänglichen Styrol-Butadien-Blockcopolymeren der allgemeinen Struktur

(S₁B₁-)ₘ-X-(-S₂B₂)ₙ

in der S₁B₁ einen Blockcopolymerabschnitt aus wenigstens je einem Polystyrolblock der Molmasse 3000 bis 230 000 [g/mol] und einem Polybutadienblock der Molmasse 2000 bis 30 000 [g/mol] und S₂B₂ einen von S₁B₁ verschiedenen Blockcopolymerabschnitt aus wenigstens je einem Polystyrolblock der Molmasse 2000 bis 60 000 [g/mol] und einem Polybutadienblock der Molmasse 2000 bis 30 000 [g/mol] bedeutet, wobei die Gesamtmolmasse von S₁B₁ : 50 000 bis 250 000 [g/mol] und die von S₂B₂ : 5000 bis 75 000 [g/mol] ist, die Blockübergänge scharf oder verschmiert sind und die Sternastzahl m + n insgesamt 3 bis 15 ist, mit der Maßgabe, daß m ≦ n ist und/oder mindestens einem linearen Styrol-Butadien-Blockcopolymeren mit mindestens zwei Polystyrolblöcken und mindestens einem Polybutadienblock vergleichbarer Gesamtmolmasse und 0,01 bis 1 Gew.-%, bezogen auf die Masse oder der Blockcopolymeren, α-Tocopherol (Vitamin E).

## Beschreibung

Aus der EP-A-0 524 488 sind siegelfähige peelbare Kunststoffolien bekannt. Eingesetzt werden als einer der Bestandteile für die Schichten B, C, D und E Styrol-Butadien-Blockcopolymere mit den üblichen Antioxidantien. Nach einer Definition in R. Gächter und H. Müller, Taschenbuch der Kunststoff-Additive, 2. Aufl., 1983, S. 2, Carl Hanser Verlag München sind Antioxidantien chemische Verbindungen, welche die Oxidation und die daraus resultierenden Alterungserscheinungen eines Polymeren verzögern können.

Man unterscheidet bei den Antioxidantien auf Grund ihres Wirkmechanismus zwischen primären und sekundären Antioxidantien. Die wichtigsten primären Antioxidantien sind vor allem sterisch gehinderte Phenole, daneben sekundäre aromatische Amine. Letztere spielen speziell bei Thermoplasten wegen ihrer produktverfärbenden Tendenz nur eine untergeordnete Rolle.

Primäre Antioxidantien wirken als Radikalfänger, während die sekundären (Phosphite, Thioether) Hydroperoxide zersetzen. In der Praxis werden häufig synergistische Mischungen aus primären und sekundären Antioxidantien angewendet.

Die im Handel befindlichen sterisch gehinderten Phenole weisen eine große strukturelle Vielfalt auf: Thiobisphenole, Alkyliden-Bisphenole, Alkylphenole, Hydroxybenzylverbindungen, Acylaminophenole, Hydroxy-phenylpropionate (R. Gächter und H. Müller, a.a.O. S. 9f.)

Siegelfähige, peelbare Kunststoffolien nach der EP-A- 0 524 488 werden zum Verpacken von Lebensmitteln eingesetzt. Ein typischer Einsatzzweck ist die Anwendung als siegelfähiger, peelbarer Deckel für Becher, die z.B. mit Joghurt, Quark oder anderen Molkereiprodukten befüllt und hygienisch dicht verschlossen werden müssen.

Derartige Deckel werden aus Werbegründen mit aufwendigen, fast Photoqualität erreichenden Motiven bedruckt. Solch eine hochwertige Bedruckung erfolgt im Tiefdruckverfahren. Styrol-Butadien-Blockcopolymere sind vernetzungsempfindlich und können bei der Herstellung der erfindungsgemäßen Folien aufgrund von Vernetzungsreaktionen zu sogenannten Stippen führen, die sich als Erhebungen in der Folie manifestieren und dadurch insbesondere beim Tiefdruckverfahren zum Abheben der Druckwalze mit anschließenden Störungen des Druckbildes führen. Daher besteht die Aufgabe darin, Stabilisatoren zu finden, welche sowohl lebensmittelrechtlich unbedenklich als auch als hochwirksame Stabilisatoren gegen Oxidations- und damit verbundene Vernetzungsreaktionen geeignet sind.

Vitamin E (auch α-Tocopherol genannt), das zu den sterisch gehinderten Phenolen gehört, ist als Stabilisator bekannt. EP-A-384 472 beschreibt die Verwendung von Vitamin E für Verpackungsmaterial aus Polystyrol, in Verbindung mit Lichtschutzmitteln.

EP-A-408 693 beschreibt Stabilisatormischungen für Styrol-Polymere aus Vitamin E und Mono/Di/Triglyceriden.

Es wurde gefunden, daß die Verwendung von Vitamin E, insbesondere eine Mischung des sekundären Antioxidans Phosphit mit Vitamin E eine hervorragende Stabilisatorwirkung in Styrol/Butadien-Blockcopolymeren zeigt.

Unmittelbarer Erfindungsgegenstand sind daher Formmassen aus mindestens einem durch anionische Polymerisation zugänglichen Styrol-Butadien-Blockcopolymeren der allgemeinen Struktur

(S₁B₁-)ₘ-X-(-S₂B₂)ₙ

in der S₁B₁ einen Blockcopolymerabschnitt aus wenigstens je einem Polystyrolblock der Molmasse 3000 bis 230 000 [g/mol] und einem Polybutadienblock der Molmasse 2000 bis 30 000 [g/mol] und S₂B₂ einen von S₁B₁ verschiedenen Blockcopolymerabschnitt aus wenigstens je einem Polystyrolblock der Molmasse 2000 bis 60 000 [g/mol] und einem Polybutadienblock der Molmasse 2000 bis 30 000 [g/mol] bedeutet, wobei die Gesamtmolmasse von S₁B₁ : 50 000 bis 250 000 [g/mol] und die von S₂B₂ : 5000 bis 75 000 [g/mol] ist, die Blockübergänge scharf oder verschmiert sind, die Sternastzahl m + n insgesamt 3 bis 15 ist und X den Rest eines (m+n)-funktionellen Kopplungsmittels bedeutet, mit der Maßgabe, daß m ≦ n ist und/oder mindestens einem linearen Styrol-Butadien-Blockcopolymeren mit mindestens zwei Polystyrolblöcken und mindestens einem Polybutadienblock vergleichbarer Gesamtmolmasse und 0,01 bis 1 Gew.-%, bezogen auf die Masse oder der Blockcopolymeren, α-Tocopherol (Vitamin E)
und/oder eines linearen Styrol-Butadien-Blockcopolymeren mit mindestens 2 Polystyrolblöcken und mindestens 1 Polybutadienblock, wobei 0.g. Molgewichtsangaben gelten, und 0,01 bis 1 Gew.-%, bezogen auf das Polymere, α-Tocopherol.

In einer bevorzugten Ausführungsform sind noch zusätzlich 0,1 bis 2 Gew.-%, bezogen auf das Polymere, eines organischen Phosphits enthalten. Insbesondere handelt es sich hierbei um Tris(nonylphenyl)phosphit, TNPP.

Styrol-Butadien-Blockcopolymere sind durch anionische Polymerisation leicht zugänglich und seit langem bekannt (siehe beispielsweise in M. Szwarc: "Carbanions, Living Polymers and Electron Transfer Processes, John Wiley Publ. 1968).

Styrol-Butadien-Blockcopolymere besitzen i.a. eine sog. Zylinder- und Lamellenmorphologie. Verglichen mit den sich von der Kugelform ableitenden Morphologien (Zellenteilchen-, Kapselteilchen-, Tropfenteilchen- oder Fadenteilchenmorphologien bei gewöhnlichem schlagzähem Polystyrol oder Acrylnitril-Butadien-Styrol-Polymeren) wird bei Blockcopolymeren die Kautschukphase bei der Verarbeitung einer wesentlich höheren Belastung ausgesetzt. Durch die unmittelbare chemische Verknüpfung mit der Hartphase werden Spannungen in der Kautschukphase schlechter abgebaut und damit die thermisch-oxidative Schädigung stark erleichtert. Es ist daher besonders schwierig, eine Stabilisierung gegen solche Schädigungen zu finden.

Zu diesen Blockcopolymeren gehören erfindungsgemäß sternförmig verzweigte Styrol-Butadien-Blockcopolymerisate mit überwiegendem Styrolanteil, wie sie z.B. in US 3 639 517 (70 bis 95 % Styrol, 5 bis 30 % Butadien), DE-PS 25 50 227 und DE-OS 25 50 226 (60 bis 95 % Styrol, 5 bis 40 % Butadien) beschrieben werden.

Auch Mischungen solcher Blockcopolymeren mit anderen thermoplastisch verarbeitbaren Polymeren, wie z.B. die in DE-PS 26 10 068 beschriebenen Mischungen mit Polystyrol werden bei der Verarbeitung durch Zusatz von α-Tocopherol wirksam geschützt.

α-Tocopherol wird in einer Konzentration von 0,01 bis 1 Gew.-%, vorzugsweise von 0,1 bis 0,5 Gew.-% angewandt. Es kann den Polymeren in jeder bekannten bzw. üblichen Art und Weise beigemengt werden, z.B. in reiner Form direkt bei der Verarbeitung, durch Vormischen von Antioxidans und unstabilisiertem Polymergranulat, durch Vormischen von Antioxidans und Polymer in Lösung und gemeinsame Entgasung oder in Form eines Konzentrats (Masterbatch).

Unter Verarbeitung werden dabei alle üblichen Methoden verstanden, mit denen thermoplastisch verarbeitbare Polymere aufgeschmolzen und umgeformt werden, z.B. über Extruder, Spritzgußmaschine, Kneter, usw.

Das organische Phosphit wird in der bevorzugten Ausführungsform in einer Menge von 0,1 bis 2 Gew.-%, vorzugsweise von 0,2 - 1 Gew.-% zugesetzt. Es handelt sich hierbei um Verbindungen der allgemeinen Formel (RO)₃P, wobei R = Alkyl, Aryl, Cycloalkyl oder Kombinationen daraus sein können. Beispiele sind: Tris(nonylphenyl)phosphit, Diphenyldecylphosphit, Didecylphenylphosphit, Phenyl-di(2-ethylhexyl)phosphit, Methyldiphenylphosphit, Triphenylphosphit, Tris(2,4-dimethylphenyl)phosphit, Phenyldicyclohexylphosphit, Trimethylphosphit, Diisopropylphenylphosphit, Diethylphenylphosphit, Di(2-ethyl-cyclohexyl)n-butylphosphit, 3-Cyclopentylpropyldihexylphosphit. Bevorzugt wird Tris(nonylphenyl)phosphit, TNPP eingesetzt.

In einer besonders bevorzugten Ausführungsform ist das organische Phosphit selbst mit einer Alkanolaminverbindung stabilisiert, insbesondere Triisopropanolamin in einer Menge von 0,1 bis 5 Gew.-%, bezogen auf 100 Gew.-% organisches Phosphit.

Die Prüfung der Verarbeitungsstabilität kann im Falle der Styrol-Butadien-Blockcopolymeren mit Zylinder- und Lamellenmorphologie, z.B. mit Hilfe des als Rheograph 2000 bekannten Meßgeräts der Fa. Göttfert, Buchen, durchgeführt werden. Dabei wird das Polymerisat ähnlich wie bei der Extruder- oder bei der Spritzgußverarbeitung als Schmelze durch eine Düse gedrückt.

Bei konstanter Schmelzetemperatur und konstanter Schergeschwindigkeit wird der Extrusionsdruck in der Düse gemessen. Im Verlauf der Meßzeit setzt infolge der thermisch-oxidativer Schädigung des Polymerisats die Vernetzung der Kautschukphase ein. Dadurch steigt die Schmelzeviskosität und damit auch der Extrusionsdruck an.

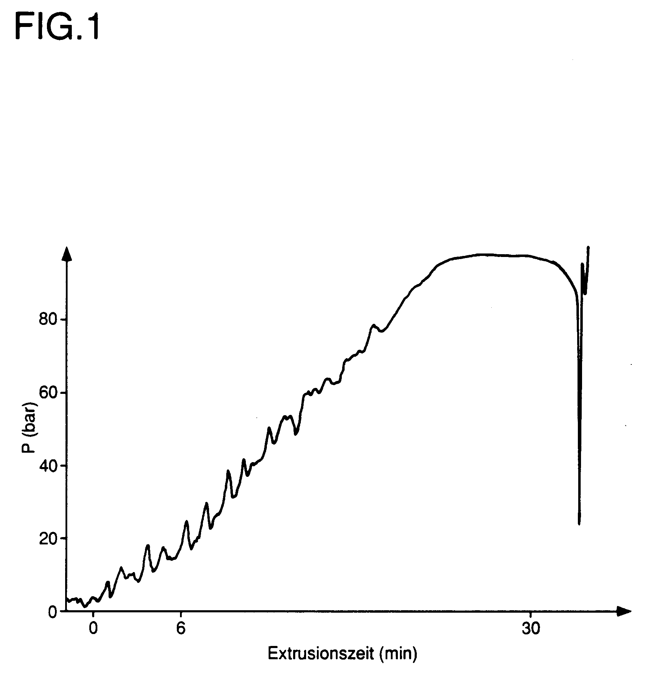

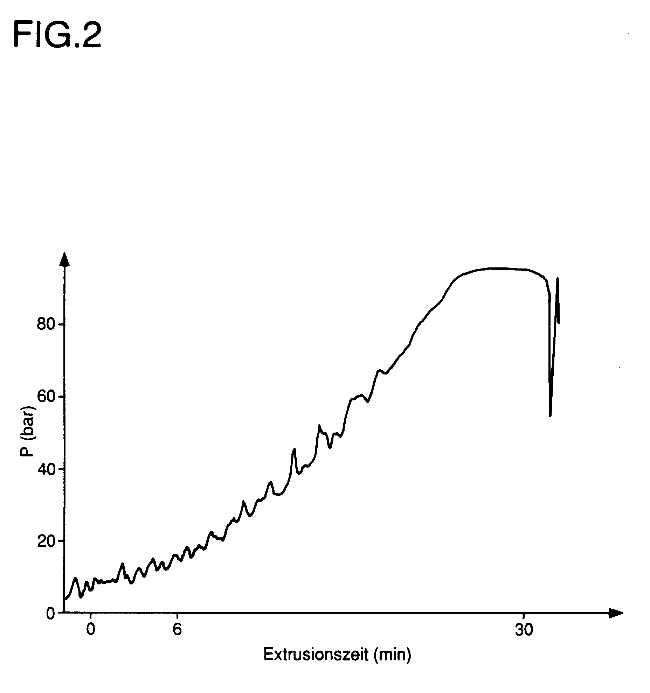

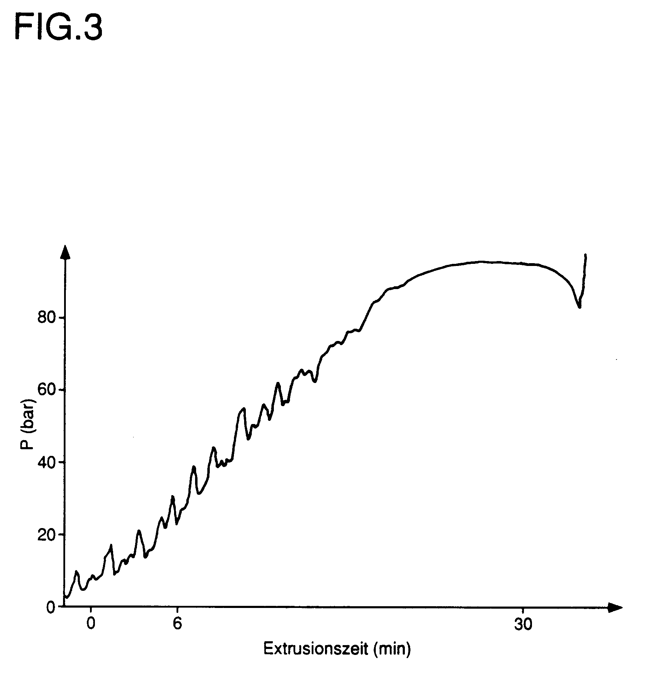

Die Wirkung eines Stabilisators kann an einem mehr oder weniger stark verzögerten Anstieg des Extrusionsdrucks im Vergleich zum nicht stabilisierten Polymer erkannt werden. Nach einer Vorlaufzeit von 6 min ab Extrusionsbeginn wird während der Meßzeit von 24 min der Extrusionsdruck p gemessen. Als Maß für die Verarbeitungsstabilität gilt die Druckdifferenz zwischen Beginn und Ende der Meßzeit, der sogenannte Vernetzungsdruck pᵥ - vgl. Fig. 1-3.

### Beispiele und Vergleichsversuch

Nach der DE-PS 25 50 227, Beispiel 1 wurde ein sternförmig verzweigtes Styrol-Butadien-Blockcopolymerisat hergestellt. Die Viskositätszahl (VZ) lag bei 83,5 ml/g. Abweichend von dieser Vorschrift wurde das Polymerisat jedoch nicht mit Methanol ausgefällt, sondern zunächst als Lösung in 3 gleich große Portionen aufgeteilt, wobei auf strengen Ausschluß von Luft durch Überlagerung mit Stickstoff geachtet wurde. Die 3 Proben wurden entsprechend der nachfolgenden Liste durch Zusatz von Antioxidantien stabilisiert und danach durch schonendes Entgasen des Lösungsmittels auf einer Zweiwellenschneckenknetmaschine ZSK 25 der Fa. Werner & Pfleiderer bei 200°C extrudiert und granuliert. Die verwendeten Bezeichnung TNPP bedeutet Trisnonylphenylphosphit, 2-tert.butyl-6-(3-tert.butyl-2-hydroxy-5-methylbenzyl)-4-methylphenylacrylat ist als Irganox® 3052 handelsüblich (Hersteller Ciba-Geigy AG).

### Beispiel 1

- 0,4 Gew.-%,: bezogen auf das Polymere, an α-Tocopherol und
- 0,85 Gew.-%,: bezogen auf das Polymere, an TNPP

### Beispiel 2

- 0,05 Gew.-%,: bezogen auf das Polymere, an α-Tocopherol und
- 0,55 Gew.-%,: bezogen auf das Polymere, an TNPP

### Vergleichsversuch

- 0,35 Gew.-%,: bezogen auf das Polymere, an Irganox 3052 und
- 0,85 Gew.-%,: bezogen auf das Polymere, an TNPP
Die Proben der Beispiele wurden mit dem erwähnten Viskositätsmeßgerät Rheograph 2000 bei einer Temperatur von 290°C und einer Schergeschwindigkeit von 1,44 · 10¹ s⁻¹ vermessen.

| Probe: | 1 | 2 | Vergleichsversuch |
|---|---|---|---|
| Konzentration des phenolischen Stabilisators | 0,4 | 0,055 | 0,35 |
| Pᵥ [bar] | 87 | 85 | 82 |

Der zeitliche Verlauf der Scherkurven ist in den Abbildungen 1 bis 3 wiedergegeben.

## Patentansprüche

1. Formmasse aus mindestens einem durch anionische Polymerisation zugänglichen Styrol-Butadien-Blockcopolymeren der allgemeinen Struktur
(S₁B₁-)ₘ-X-(-S₂B₂)ₙ
in der S₁B₁ einen Blockcopolymerabschnitt aus wenigstens je einem Polystyrolblock der Molmasse 3000 bis 230 000 [g/mol] und einem Polybutadienblock der Molmasse 2000 bis 30 000 [g/mol] und S₂B₂ einen von S₁B₁ verschiedenen Blockcopolymerabschnitt aus wenigstens je einem Polystyrolblock der Molmasse 2000 bis 60 000 [g/mol] und einem Polybutadienblock der Molmasse 2000 bis 30 000 [g/mol] bedeutet, wobei die Gesamtmolmasse von S₁B₁ : 50 000 bis 250 000 [g/mol] und die von S₂B₂ : 5000 bis 75 000 [g/mol] ist, die Blockübergänge scharf oder verschmiert sind, die Sternastzahl m + n insgesamt 3 bis 15 ist und X den Rest eines (m+n)-funktionellen Kopplungsmittels bedeutet, mit der Maßgabe, daß m ≦ n ist und/oder mindestens einem linearen Styrol-Butadien-Blockcopolymeren mit mindestens zwei Polystyrolblöcken und mindestens einem Polybutadienblock vergleichbarer Gesamtmolmasse und 0,01 bis 1 Gew.-%, bezogen auf die Masse oder der Blockcopolymeren, α-Tocopherol (Vitamin E).

2. Formmasse nach Anspruch 1, enthaltend 0,1 bis 2 Gew.-%, bezogen auf das Polymere, eines organischen Phosphits.

3. Formmasse nach Anspruch 2, enthaltend als organisches Phosphit Tris(nonylphenyl)phosphit.

4. Mehrschichtige, siegelfähige Kunststoffolie, im wesentlichen aus
A: einer Deckschicht A aus einem wärmeformbeständigen Polymeren mit einem Schmelzpunkt oberhalb von 200°C,
B: einem Haftvermittler B aus, bezogen auf B, 30 bis 95 Gew.-% eines Styrol-Butadien-Blockcopolymeren, bis 95 Gew.-% Polystyrol und/oder schlagzähem Polystyrol sowie 5 bis 70 Gew.-% eines mit Polystyrol unverträglichen Polymeren, das polare Gruppen enthält,
C: einer Trägerschicht C aus 5 bis 100 Gew.-% eines Styrol-Butadien-Blockcopolymeren und bis zu 95 Gew.-% Polystyrol und/oder schlagzähem Polystyrol,
D: im Bedarfsfall einer Barriereschicht D, die der Deckschicht A entsprechen kann,
E: einer Siegelschicht E, die nach ihrer Zusammensetzung im wesentlichen dem Haftvermittler B entspricht,
dadurch gekennzeichnet, daß sie ein Styrol-Butadien-Blockcopolymer nach Anspruch 1 enthält.

5. Folie nach Anspruch 4, enthaltend einen Haftvermittler B aus 50 bis 90 Gew.-% Blockcopolymer, bis 80 Gew.-% Polystyrol bzw. schlagzähem Polystyrol und 10 bis 50 Gew.-% polare Gruppen enthaltendem Polymer sowie eine Trägerschicht C aus 20 bis 95 Gew.-% Blockcopolymer und 5 bis 80 Gew.-% Polystyrol bzw. schlagzähes Polystyrol.

6. Folie nach Anspruch 4, enthaltend eine Deckschicht A und/oder eine Barriereschicht D aus Polyamid oder Polyester.
